(19) Europäisches Patentamt
European Patent Office
Office européen des brevets

(11) **EP 4 012 355 A1**

(12) **EUROPÄISCHE PATENTANMELDUNG**

(43) Veröffentlichungstag:
**15.06.2022 Patentblatt 2022/24**

(21) Anmeldenummer: **20213663.6**

(22) Anmeldetag: **14.12.2020**

(51) Internationale Patentklassifikation (IPC):
***G01D 5/347*** *(2006.01)*

(52) Gemeinsame Patentklassifikation (CPC):
**G01D 5/34707; G01D 5/34715;** G01D 5/34792

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Hilti Aktiengesellschaft**
**9494 Schaan (LI)**

(72) Erfinder:
• **Lukic, Sasha**
**9470 Buchs (CH)**
• **Mitic, Nenad**
**26230 Pancevo (RS)**
• **Radivojevic, Djordje**
**11060 Beograd (RS)**

(74) Vertreter: **Hilti Aktiengesellschaft**
**Corporate Intellectual Property**
**Feldkircherstrasse 100**
**Postfach 333**
**9494 Schaan (LI)**

(54) **VORRICHTUNG UND VERFAHREN ZUM ERMITTELN EINER REFERENZKURVE FÜR DIE DREHLAGE EINES ROTATIONSBAUTEILS**

(57)     Vorrichtung (10) zum Ermitteln einer Referenzkurve für die Drehlage eines Rotationsbauteils (11), das um eine Drehachse (12) drehbar ist, aufweisend eine Encoderscheibe (21), die mit dem Rotationsbauteil (11) verbunden und um die Drehachse (12) des Rotationsbauteils (11) drehbar ist, und eine Winkelmesseinrichtung (22), die eine Strahlquelle (25), eine Sensoreinheit (27) und eine Kontrolleinheit (28) umfasst.

FIG. 1A

# Beschreibung

## Technisches Gebiet

Die vorliegende Erfindung betrifft eine Vorrichtung zum Ermitteln einer Referenzkurve für die Drehlage eines Rotationsbauteils gemäß dem Oberbegriff des Anspruchs 1 sowie ein Verfahren zum Ermitteln einer Referenzkurve für die Drehlage eines Rotationsbauteils mittels einer solchen Vorrichtung gemäß dem Oberbegriff des Anspruchs 7.

## Stand der Technik

Die Drehlage eines Rotationsbauteils wird mithilfe von Encodern bestimmt. Ein Encoder ist eine Vorrichtung, die einen Positions- oder Bewegungswert in ein elektrisches Signal umwandelt, in der Regel in einen digitalen Code. Encoder können rotierend oder linear ausgebildet sein und als Absolutencoder oder Inkrementalencoder ausgebildet sein. Inkrementalencoder müssen im Gegensatz zu Absolutencodern nach dem Einschalten referenziert werden, da Positionsänderungen (Lageänderung oder Winkeländerung) im ausgeschalteten Zustand nicht erfasst werden.

Der Encoder umfasst eine Encoderscheibe, die mit dem Rotationsbauteil verbunden und um die Drehachse des Rotationsbauteils drehbar ist, und eine Winkelmesseinrichtung. Die Winkelmesseinrichtung umfasst eine Strahlquelle, eine Sensoreinheit und eine Kontrolleinheit. Die Strahlquelle erzeugt einen Messstrahl, der auf oder durch eine gerasterte Encoderscheibe trifft, so dass der Messstrahl durchgelassen oder blockiert wird. Die Sensoreinheit, die als optischer Detektor oder Lesekopf ausgebildet ist, erfasst den Durchgang des Messstrahls und erzeugt ein entsprechendes elektrisches Signal. Die Sensoreinheit umfasst zwei versetzt angeordnete Fotodetektoren. Rotiert die Encoderscheibe, werden die Fotodetektoren abwechselnd beleuchtet. Die Messwerte des ersten Fotodetektors werden als erste Messwerte (erstes Ausgangssignal) und die Messwerte des zweiten Fotodetektors als zweite Messwerte (zweites Ausgangssignal) erfasst.

Bekannte Encoderscheiben sind kreisförmig ausgebildet und weisen eine periodische Außenkontur mit N Perioden und einem Nullpunkt auf, wobei die abgewickelte Außenkontur der Encoderscheiben eine Rechteckfunktion darstellt. Nachteil der bekannten Encoderscheiben ist, dass die Genauigkeit, mit der die Drehlage des Rotationsbauteils bestimmt werden kann, von der Anzahl N der Perioden abhängt.

## Darstellung der Erfindung

Die Aufgabe der vorliegenden Erfindung besteht in der Entwicklung einer Vorrichtung, die zum Ermitteln einer Referenzkurve für die Drehlage eines Rotationsbauteils ausgebildet ist und die geeignet ist, die Drehlage des Rotationsbauteils mit großer Genauigkeit zu bestimmen oder einzustellen.

Diese Aufgabe wird bei der eingangs genannten Vorrichtung erfindungsgemäß durch die Merkmale des unabhängigen Anspruchs 1 gelöst. Vorteilhafte Weiterbildungen sind in den abhängigen Ansprüchen angegeben.

Erfindungsgemäß ist die Vorrichtung dadurch gekennzeichnet, dass die Perioden der Außenkontur der Encoderscheibe aus einem ersten Funktionsabschnitt und einem zweiten Funktionsabschnitt zusammengesetzt sind, wobei der erste Funktionsabschnitt und zweite Funktionsabschnitt monoton verlaufend sind, einer der ersten und zweiten Funktionsabschnitte monoton steigend und der andere der ersten und zweiten Funktionsabschnitte monoton fallend ist. Die Zusammensetzung der Perioden aus einem monoton steigenden Funktionsabschnitt und einem monoton fallenden Funktionsabschnitt hat den Vorteil gegenüber rechteckförmigen Perioden, dass die Drehlage mit einer höheren Genauigkeit bestimmt werden kann. In den monoton verlaufenden Funktionsabschnitten ist eine genaue Bestimmung der Drehlage möglich.

Bevorzugt ist der Übergang vom ersten Funktionsabschnitt zum zweiten Funktionsabschnitt stetig ausgebildet. Durch einen stetigen Übergang vom ersten Funktionsabschnitt zum zweiten Funktionsabschnitt ist an den Übergängen eine Bestimmung der Drehlage möglich.

Besonders bevorzugt bilden der erste Funktionsabschnitt und zweite Funktionsabschnitt eine Sinusfunktion. Die Sinusfunktion besteht aus monotonen Funktionsabschnitten mit einem stetigen Übergang. Die Vorrichtung umfasst eine erste Messfläche und zweite Messfläche, die voneinander verschieden sind und die erste Messwerte und zweite Messwerte aufnehmen. Da die Außenkontur der Encoderscheibe als Sinusfunktion darstellbar ist, folgen die erste und zweite Messkurve, die mittels der ersten Messfläche und zweiten Messfläche ermittelt werden, einem sinusförmigen Verlauf, wobei die erste Messkurve und zweite Messkurve um eine Phasendifferenz relativ zueinander verschoben sind. Die Encoderscheibe der erfindungsgemäßen Vorrichtung ermöglicht es, die Drehlage des Rotationsbauteils mit großer Genauigkeit zu bestimmen.

Bevorzugt umfasst die Sensoreinheit eine erste Messfläche und eine zweite Messfläche, wobei die erste Messfläche von der zweiten Messfläche verschieden ist. Das erfindungsgemäße Verfahren benötigt eine erste Messkurve und zweite Messkurve, die relativ zueinander verschoben sind. Die erste und zweite Messkurve wird mittels der ersten Messfläche und zweiten Messfläche bestimmt.

In einer ersten Variante weist die Sensoreinheit ein erstes Sensorelement, welches die erste Messfläche, und ein zweites Sensorelement, welches die zweite Messfläche umfasst, auf. Die Verwendung eines ersten Sensorelements mit der ersten Messfläche und eines zweiten Sensorelementes mit der zweiten Messfläche ermöglicht eine einfache Unterscheidung zwischen den ersten Messwerten und zweiten Messwerten.

In einer zweiten Variante weist die Sensoreinheit ein Sensorelement mit einem Messbereich auf, wobei die erste Messfläche und zweite Messfläche in den Messbereich integriert sind. Die Verwendung eines Sensorelements, bei dem die erste und zweite Messfläche in den Messbereich integriert sind, ermöglicht die Unterscheidung zwischen den ersten und zweiten Messwerten bei geringem apparativem Aufwand.

Die vorliegende Erfindung betrifft außerdem ein Verfahren zum Ermitteln einer Referenzkurve für die Drehlage eines Rotationsbauteils mittels einer Vorrichtung nach einem der Ansprüche 4 bis 6, mit den Schritten:

- der Messstrahl, der auf die Außenkontur der rotierenden Encoderscheibe und auf die Sensoreinheit gerichtet ist, wird von der ersten Messfläche als erste Messwerte und von der zweiten Messfläche als zweite Messwerte erfasst,
- die ersten Messwerte und zweiten Messwerte werden von der Sensoreinheit an die Kontrolleinheit übermittelt,
- die ersten Messwerte und zugehörige erste Zeitwerte werden von der Kontrolleinheit als erste Messkurve und die zweiten Messwerte und zugehörige zweite Zeitwerte als zweite Messkurve dargestellt,
- die erste Messkurve und/oder zweite Messkurve werden von der Kontrolleinheit relativ zueinander verschoben, bis eine Phasendifferenz von 90° zwischen einer ersten phasenverschobenen Messkurve und einer zweiten phasenverschobenen Messkurve vorliegt,
- aus der phasenverschobenen ersten Messkurve und phasenverschobenen zweiten Messkurve werden von der Kontrolleinheit für mehrere Zeitwerte erste Funktionswerte und zweite Funktionswerte bestimmt und auf die Quotienten aus den ersten und zweiten Funktionswerten wird die Arcustangens-Funktion gemäß der Formel $\varphi = \tan^{-1}\left(\frac{R_1}{R_2}\right)$ angewandt und

- die berechneten Winkelwerte werden von der Kontrolleinheit im Zeitverlauf dargestellt und als Referenzkurve für die Drehlage des Rotationsbauteils gespeichert.

Mithilfe des erfindungsgemäßen Verfahrens wird eine Referenzkurve für die Drehlage des Rotationsbauteils ermittelt, aus der die Drehlage des Rotationsbauteils mit großer Genauigkeit bestimmt oder eingestellt werden kann. Zur Ermittlung der Referenzkurve wird der Messstrahl der Strahlquelle auf die Außenkontur der rotierenden Encoderscheibe und auf die Sensoreinheit gerichtet, wobei die erste Messfläche erste Messwerte und die zweite Messfläche zweite Messwerte erfasst. Die weitere Auswertung und Bestimmung der Referenzkurve erfolgt in der Kontrolleinheit der Vorrichtung.

Die ersten Mess- und Zeitwerte werden von der Kontrolleinheit als erste Messkurve dargestellt und die zweiten Mess- und Zeitwerte werden als zweite Messkurve dargestellt. Die erste Messkurve und zweite Messkurve weisen einen sinusförmigen Verlauf auf und sind um eine Phasendifferenz relativ zueinander verschoben. Die Phasendifferenz zwischen der ersten Messkurve und zweiten Messkurve ist von der räumlichen Anordnung der ersten Messfläche und zweiten Messfläche abhängig. Die erste Messkurve und zweite Messkurve werden von der Kontrolleinheit relativ zueinander verschoben, bis eine Phasendifferenz von 90° zwischen einer ersten phasenverschobenen Messkurve und einer zweiten phasenverschobenen Messkurve vorliegt.

Die Kontrolleinheit bildet für mehrere Zeitwerte jeweils den Quotienten aus einem ersten und zweiten Funktionswert und wendet die Arcustangens-Funktion

gemäß der Formel $\varphi = \tan^{-1}\left(\frac{R_1}{R_2}\right)$ auf die Quotienten an. Das Ergebnis der Berechnungen sind Winkelwerte, die von der Zeit abhängig sind. Diese Winkelwerte werden von der Kontrolleinheit im Zeitverlauf dargestellt und als Referenzkurve für die Drehlage des Rotationsbauteils gespeichert. Die Referenzkurve weist einen Verlauf auf, aus dem die Drehlage des Rotationsbauteils mit hoher Genauigkeit bestimmt werden kann oder eingestellt werden kann.

In einer bevorzugten Variante werden als erste Funktionswerte die ersten Messwerte und als zweite Funktionswerte die zweiten Messwerte verwendet. Durch die Verwendung der ersten Messwerte als erste Funktionswerte und der zweiten Messwerte als zweite Funktionswerte ist der Rechenaufwand beim Ermitteln der Referenzkurve für die Drehlage des Rotationsbauteils reduziert.

In einer alternativen bevorzugten Variante werden als erste Funktionswerte erste Näherungswerte und als zweite Funktionswerte zweite Näherungswerte verwendet, wobei die ersten Näherungswerte aus der ersten Messkurve und die zweiten Näherungswerte aus der zweiten Messkurve bestimmt werden. Durch die Verwendung von ersten Näherungswerten als erste Funktionswerte und von zweiten Näherungswerten als zweite Funktionswerte kann die Genauigkeit, mit der die Referenzkurve für die Drehlage des Rotationsbauteils ermittelt wird, erhöht werden.

**Ausführungsbeispiele**

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:

FIGN. 1A,       B eine erfindungsgemäße Vorrichtung, die zum Ermitteln einer Referenzkurve für die Drehlage eines Rotationsbauteils ausgebildet ist, in einer Seitenansicht (FIG. 1A) und in einem Längsschnitt (FIG. 1B);

FIGN. 2A, B     die erfindungsgemäße Vorrichtung der FIG. 1, die eine Encoderscheibe (FIG. 2A) und eine Winkelmesseinrichtung (FIG. 2B) umfasst;

FIGN. 3A,       B eine Sensoreinheit der Winkelmesseinrichtung in einer ersten Variante (FIG. 3A) und einer zweiten Variante (FIG. 3B);

FIGN. 4A-C      verschiedene Stadien während der Durchführung des erfindungsgemäßen Verfahrens zum Ermitteln der Referenzkurve mithilfe der Vorrichtung der FIG. 1; und

FIGN. 5A, B     die Außenkontur der Encoderscheibe in einer ersten Variante (FIG. 5A) und einer zweiten Variante (FIG. 5B).

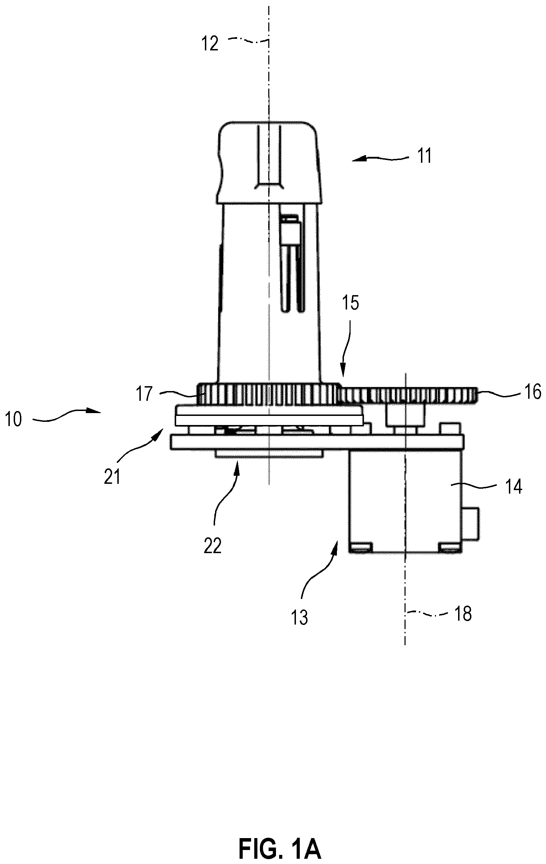

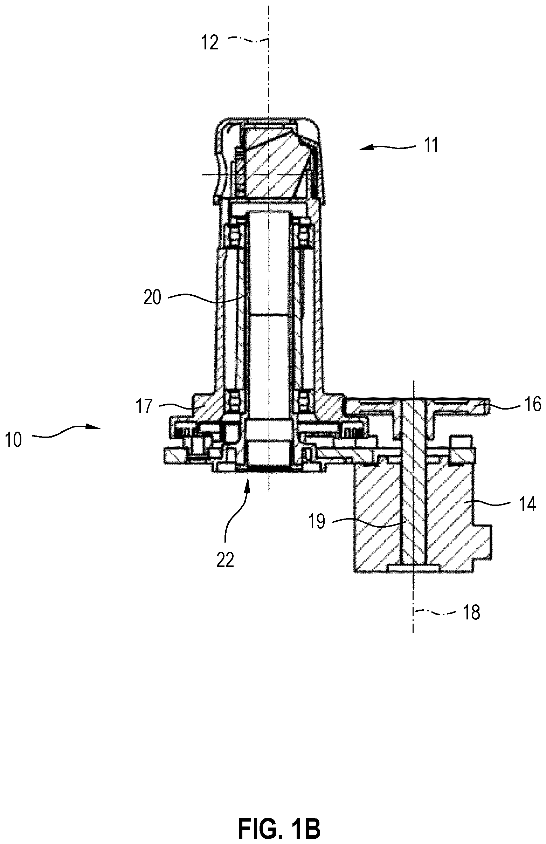

**FIGN. 1A, B** zeigen eine erfindungsgemäße Vorrichtung **10,** die zum Ermitteln einer Referenzkurve für die Drehlage φ eines Rotationsbauteils **11** ausgebildet ist. Dabei zeigt FIG. 1A die Vorrichtung 10 in einer Seitenansicht und FIG. 1B in einem Längsschnitt.

Das Rotationsbauteil 11 ist um eine Drehachse **12** drehbar ausgebildet, wobei das Rotationsbauteil 11 von einer Antriebseinheit **13** um die Drehachse 12 angetrieben wird. Die Antriebseinheit 13 umfasst einen Motor **14,** der als Schrittmotor ausgebildet sein kann, und ein Zahnradgetriebe **15** mit einem ersten Zahnrad **16,** das mit dem Motor **14** verbunden ist, und einem zweiten Zahnrad **17,** das mit dem Rotationsbauteil 11 verbunden ist. Das erste Zahnrad 16 greift in das zweite Zahnrad 17 ein und wird vom Motor 14 um eine Antriebsachse **18** angetrieben. Die Bewegung des Motors 14 wird über das Zahnradgetriebe 15 in eine Bewegung des Rotationsbauteils 11 um die Drehachse 12 umgewandelt.

Der Motor 14 ist mit einem ersten Achselement **19** verbunden, das um die Antriebsachse 18 drehbar ausgebildet ist und das mit dem ersten Zahnrad 16 drehfest verbunden ist. Das Rotationsbauteil 11 umfasst ein zweites Achselement **20,** das mit dem zweiten Zahnrad 17 drehfest verbunden ist. Im Ausführungsbeispiel ist das zweite Achselement 20 innen hohl ausgebildet und dient zur Strahlführung eines optischen Strahls, beispielsweise eines Laserstrahls.

Die Drehlage φ des Rotationsbauteils 11 kann mithilfe der erfindungsgemäßen Vorrichtung 10 gemessen werden. Die Vorrichtung 10 umfasst eine Encoderscheibe **21** und eine Winkelmesseinrichtung **22.** Die Encoderscheibe 21 ist mit dem Rotationsbauteil 11 verbunden und mit dem Rotationsbauteil 11 um die Drehachse 12 drehbar ausgebildet.

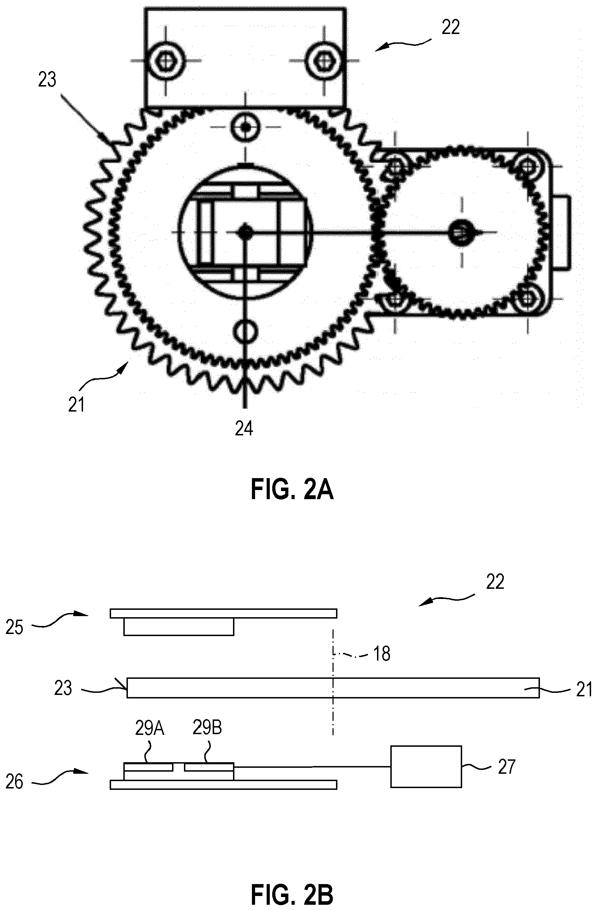

**FIG. 2A, B** zeigen die Encoderscheibe 21 und die Winkelmesseinrichtung 22. Dabei zeigt FIG. 2A die Encoderscheibe 21 in einer Ansicht von oben und FIG. 2B die Winkelmesseinrichtung 22 in einer schematischen Darstellung.

Die Drehlage φ des Rotationsbauteils 11 wird mithilfe der Encoderscheibe 21 und der Winkelmesseinrichtung 22 bestimmt. Die Encoderscheibe 21 ist kreisförmig ausgebildet und weist eine periodische Außenkontur **23** mit N Perioden und einem Nullpunkt **24** auf. Die Winkelmesseinrichtung 22 umfasst eine Strahlquelle **25,** die einen Messstrahl **26** aussendet, eine Sensoreinheit **27** und eine Kontrolleinheit **28,** wobei die Sensoreinheit 27 eine erste Messfläche **29A** und eine zweite Messfläche **29B** aufweist. Die erste und zweite Messfläche 29A, 29B sind mit der Kontrolleinheit 28 verbunden und können ihre Messwerte an die Kontrolleinheit 28 übermitteln. Die Messwerte der ersten Messfläche 29A werden als erste Messwerte bezeichnet und die Messwerte der zweiten Messfläche 29B werden als zweite Messwerte bezeichnet. Die Sensoreinheit 27 der Winkelmesseinrichtung 22 kann unterschiedlich aufgebaut sein.

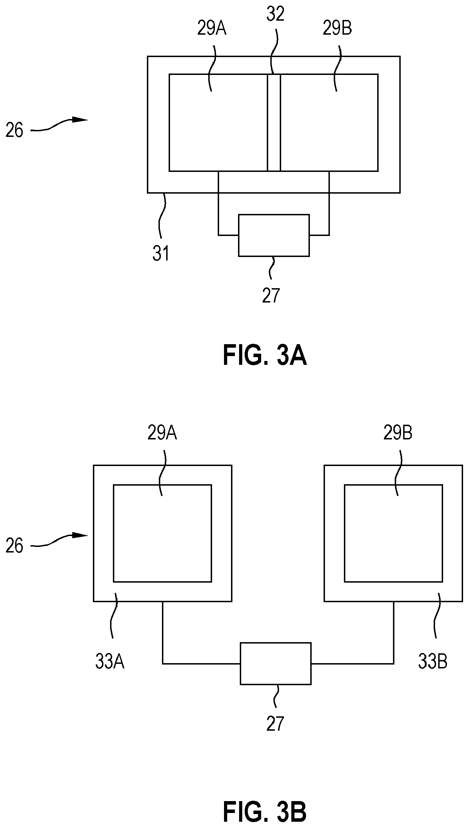

**FIG. 3A, B** zeigen den Aufbau der Sensoreinheit 27 in einer ersten Variante (FIG. 3A) und in einer zweiten Variante (FIG. 3B). In der ersten Variante weist die Sensoreinheit ein Sensorelement **31** mit einem Messbereich **32** auf und die erste Messfläche 29A und zweite Messfläche 29B sind in den Messbereich 32 des Sensorelementes 31 integriert. In der zweiten Variante weist die Sensoreinheit 27 ein erstes Sensorelement **33A,** welches die erste Messfläche 29A umfasst, und ein zweites Sensorelement **33B,** welches die zweite Messfläche 29B umfasst, auf.

Um die Drehlage φ des Rotationsbauteils 11 mittels der erfindungsgemäßen Vorrichtung 10 bestimmen zu können, wird ein erfindungsgemäßes Verfahren zum Ermitteln einer Referenzkurve für die Drehlage φ

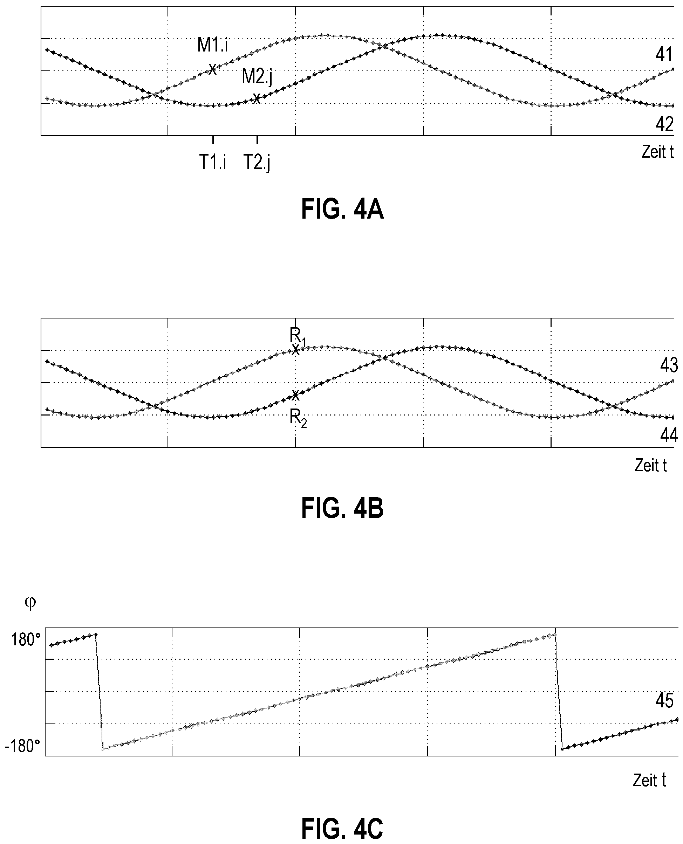

des Rotationsbauteils 11 durchgeführt. **FIGN. 4A-C** zeigen verschiedene Stadien während der Durchführung des erfindungsgemäßen Verfahrens.

Die Strahlquelle 25 sendet den Messstrahl 26 aus, der auf die Außenkontur 23 der rotierenden Encoderscheibe 21 und auf die Sensoreinheit 27 gerichtet ist. Der Messstrahl 26 trifft auf die erste Messfläche 29A, die den Messstrahl 26 als erste Messwerte **M1.i** erfasst, und auf die zweite Messfläche 29B, die den Messstrahl 26 als zweite Messwerte **M2.j** erfasst. Die ersten und zweiten Messwerte M1.i, M2.j können mit einer konstanten Messfrequenz erfasst werden, wobei die ersten und zweiten Messwerte bevorzugt mit der gleichen Messfrequenz erfasst werden. Die ersten Messwerte M1.i und zweiten Messwerte M2.j werden an die Kontrolleinheit 28 übermittelt.

Für das erfindungsgemäße Verfahren wird der Zeitverlauf der ersten Messwerte M1.i und zweiten Messwerte M2.j benötigt. Die Zuordnung von Zeitwerten zu den ersten und zweiten Messwerten kann unterschiedlich erfolgen. Wenn die Sensoreinheit 27 eine Uhr zur Zeitmessung aufweist, können den ersten und zweiten Messwerten bereits beim Erfassen erste und zweite Zeitwerte zugeordnet werden. Dabei werden den ersten Messwerten M1.i erste Zeitwerte T1.i und den zweiten Messwerten M2.j zweite Zeitwerte **T2.j** zugeordnet. Die ersten und zweiten Zeitwerte werden mit den ersten und zweiten Messwerten an die Kontrolleinheit 28 übermittelt. Wenn die Sensoreinheit 27 keine Uhr zur Zeitmessung aufweist, kann die Zuordnung von Zeitwerten zu den ersten und zweiten Messwerten durch die Kontrolleinheit 28 erfolgen. Bei der Übermittlung der ersten und zweiten Messwerte von der Sensoreinheit 27 an die Kontrolleinheit 28 erstellt die Kontrolleinheit 28 die ersten Zeitwerten T1.i für die ersten Messwerte M1.i und die zweiten Zeitwerte T2.j für die zweiten Messwerte M2.j. Die Zeitdifferenz, die zwischen dem Erfassen der Messwerte und dem Übermitteln an die Kontrolleinheit 28 vergeht, ist für die Genauigkeit mit der die Referenzkurve ermittelt werden kann, unerheblich, da die Zeitdifferenz bei den ersten und zweiten Messwerten auftritt und die ersten und zweiten Messwerte zu gleichen Zeitpunkten herangezogen werden.

Die ersten Messwerte M1.i und ersten Zeitwerte T1.i werden von der Kontrolleinheit 28 als erste Messkurve 41 dargestellt und die zweiten Messwerte M2.j und zweiten Zeitwerte T2.j werden als zweite Messkurve 42 dargestellt. Da die Außenkontur 23 der Encoderscheibe 21 als Sinusfunktion darstellbar ist, folgen die erste Messkurve 41 und zweite Messkurve 42 einem sinusförmigen Verlauf, wobei die erste Messkurve 41 und zweite Messkurve 42 um eine Phasendifferenz relativ zueinander verschoben sind. Die Phasendifferenz zwischen der ersten Messkurve 41 und zweiten Messkurve 42 ist von der räumlichen Anordnung der ersten Messfläche 29A und zweiten Messfläche 29B abhängig; die genaue Phasendifferenz ist für das erfindungsgemäße Verfahren nicht erforderlich.

Die erste Messkurve 41 und zweite Messkurve 42 werden von der Kontrolleinheit 28 relativ zueinander verschoben, bis eine Phasendifferenz von 90° zwischen einer phasenverschobenen ersten Messkurve **43** und einer phasenverschobenen zweiten Messkurve **44** vorliegt. Durch den sinusförmigen Verlauf der ersten und zweiten Messkurve 41, 42 kann eine Phasendifferenz von 90° leicht bestimmt werden. Beispielsweise liegt eine Phasendifferenz von 90° vor, wenn das erste Maximum der ersten Messkurve 41 mit der ersten Nullstelle der zweiten Messkurve 42 zusammenfällt. Die Phasendifferenz von 90° kann durch eine Verschiebung der ersten Messkurve 41, durch eine Verschiebung der zweiten Messkurve 42 oder durch eine Verschiebung der ersten und zweiten Messkurve 41, 42 erzeugt werden.

Eine Referenzkurve **45** für die Drehlage φ des Rotationsbauteils 11 wird mithilfe der phasenverschobenen ersten und zweiten Messkurve 43, 44 bestimmt. Dabei sind zwei verschiedene Varianten möglich. In einer ersten Variante wird die Referenzkurve 45 mithilfe der ersten und zweiten Messwerte bestimmt und in einer zweiten Variante wird die Referenzkurve mithilfe von ersten und zweiten Näherungswerten bestimmt.

Die erste Variante verwendet die ersten Messwerte M1.i, die von der ersten Messfläche 29A gemessen wurden, und die zweiten Messwerte M2.j, die von der zweiten Messfläche 29B gemessen wurden. Durch die Verschiebung der ersten und/oder zweiten Messkurve 41, 42 ist eine Verschiebung der ersten und/oder zweiten Zeitwerte T1.i, T2.j erforderlich. Die ersten Zeitwerte T1.i müssen an die phasenverschobene erste Messkurve 43 angepasst werden und/oder die zweiten Zeitwerte T2.j müssen an die phasenverschobene zweite Messkurve 44 angepasst werden. Nach der Anpassung der ersten und/oder zweiten Zeitwerte liegt eine Wertetabelle mit ersten Messwerten, zweiten Messwerten und zugehörigen Zeitwerten vor. Die Kontrolleinheit 28 bildet für mehrere Zeitwerte jeweils den Quotienten aus dem ersten Messwert und zweiten Messwert und wendet die Arcustangens-Funktion gemäß der Formel

$$\varphi = \tan^{-1}\left(\frac{R_1}{R_2}\right)$$

auf die Quotienten an. Das Ergebnis der Berechnungen sind Winkelwerte, die von der Zeit abhängig sind. Die Winkelwerte werden von der Kontrolleinheit 28 im Zeitverlauf dargestellt (FIG. 4C) und als Referenzkurve 45 für die Drehlage φ des Rotationsbauteils 11 gespeichert.

Die zweite Variante verwendet anstelle der ersten und zweiten Messwerte Näherungswerte. Die phasenverschobene erste Messkurve 43 und phasenverschobene zweite Messkurve 44 weisen eine Phasendifferenz von 90° auf. Die Kontrolleinheit 28 bestimmt für mehrere Zeitwerte aus der phasenverschobenen ersten Messkurve 43 erste Näherungswerte und aus der phasenverschobenen zweiten Messkurve **44** zweite Näherungswerte. Nach der Bestimmung liegt eine Wertetabelle mit ersten Näherungswerten, zweiten Näherungswerten und zugehörigen Zeitwerten vor. Die Kontrolleinheit 28 bildet für mehrere Zeitwerte jeweils den Quotienten aus dem ersten Näherungswert und zweiten Näherungswert und wendet die Arcustangens-Funktion gemäß der Formel

$$\varphi = \tan^{-1}\left(\frac{R_1}{R_2}\right)$$

$\varphi$ auf die Quotienten an. Das Ergebnis der Berechnungen sind Winkelwerte, die von der Zeit abhängig sind. Die Winkelwerte werden von der Kontrolleinheit 28 im Zeitverlauf dargestellt (FIG. 4C) und als Referenzkurve 45 für die Drehlage $\varphi$ des Rotationsbauteils 11 gespeichert.

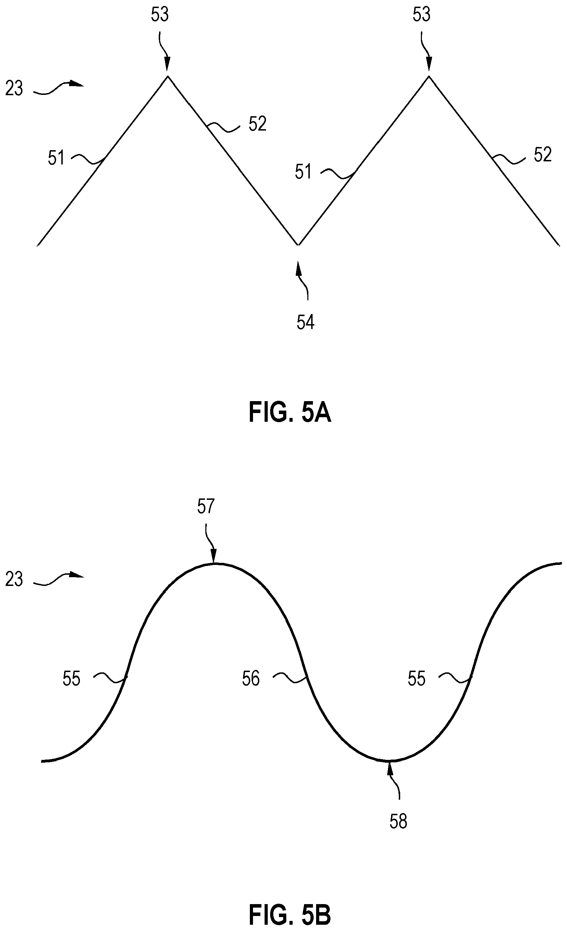

**FIGN. 5A, B** zeigen die Außenkontur 23 der Encoderscheibe 21 in einer ersten Variante (FIG. 5A) und einer zweiten Variante (FIG. 5B). Die erste Variante zeigt eine sägezahnförmige Außenkontur 23 und die zweite Variante eine sinusförmige Außenkontur 23.

FIG. 5A zeigt die erste Variante der Außenkontur 23, bei der die Perioden aus einem ersten Funktionsabschnitt **51** und einem zweiten Funktionsabschnitt **52** zusammengesetzt sind. Dabei sind der erste Funktionsabschnitt 51 monoton steigend und der zweite Funktionsabschnitt 52 monoton fallend ausgebildet. Ein Übergang **53** vom ersten Funktionsabschnitt 51 zum zweiten Funktionsabschnitt 52 ist nicht-stetig ausgebildet und ein Übergang **54** vom zweiten Funktionsabschnitt 52 zum ersten Funktionsabschnitt 51 ist nicht-stetig ausgebildet.

Die Zusammensetzung der Perioden aus dem monoton steigenden ersten Funktionsabschnitt 51 und dem monoton fallenden zweiten Funktionsabschnitt 52 hat gegenüber rechteckförmigen Perioden den Vorteil, dass die Drehlage mit einer höheren Genauigkeit bestimmt werden kann. In den monoton verlaufenden Funktionsabschnitten 51, 52 ist eine genaue Bestimmung der Drehlage möglich.

FIG. 5B zeigt die zweite Variante der Außenkontur 23, bei der die Perioden aus einem ersten Funktionsabschnitt **55** und einem zweiten Funktionsabschnitt **56** zusammengesetzt sind. Dabei sind der erste Funktionsabschnitt 55 monoton steigend und der zweite Funktionsabschnitt 56 monoton fallend ausgebildet. Ein Übergang **57** vom ersten Funktionsabschnitt 55 zum zweiten Funktionsabschnitt 56 ist stetig ausgebildet und ein Übergang **58** vom zweiten Funktionsabschnitt 56 zum ersten Funktionsabschnitt 55 ist stetig ausgebildet.

Die Zusammensetzung der Perioden aus dem monoton steigenden ersten Funktionsabschnitt 55 und dem monoton fallenden zweiten Funktionsabschnitt 56 hat gegenüber rechteckförmigen Perioden den Vorteil, dass die Drehlage mit einer höheren Genauigkeit bestimmt werden kann. In den monoton verlaufenden Funktionsabschnitten 55, 56 ist eine genaue Bestimmung der Drehlage möglich. Durch die stetigen Übergänge 57, 58 zwischen dem ersten Funktionsabschnitt 55 und dem zweiten Funktionsabschnitt 56 ist auch an den Übergängen 57, 58 eine Bestimmung der Drehlage möglich.

## Patentansprüche

1. Vorrichtung (10) zum Ermitteln einer Referenzkurve (45) für die Drehlage ($\varphi$) eines Rotationsbauteils (11), das um eine Drehachse (12) drehbar ist, aufweisend:

   - eine Encoderscheibe (21), die mit dem Rotationsbauteil (11) verbunden und um die Drehachse (12) drehbar ist, wobei die Encoderscheibe (21) kreisförmig ausgebildet ist und eine periodische Außenkontur (23) mit N Perioden und einem Nullpunkt (24) aufweist,
   - eine Strahlquelle (25), die einen Messstrahl (26) aussendet, wobei der Messstrahl (26) auf die Außenkontur (23) der Encoderscheibe (21) gerichtet ist,
   - eine Sensoreinheit (27) und
   - eine Kontrolleinheit (28), die mit der Sensoreinheit (27) verbunden ist,

   **dadurch gekennzeichnet, dass** die Perioden der Außenkontur (23) der Encoderscheibe (21) aus einem ersten Funktionsabschnitt (51, 55) und einem zweiten Funktionsabschnitt (52, 56) zusammengesetzt sind, wobei der erste Funktionsabschnitt (51, 55) und zweite Funktionsabschnitt (52, 56) monoton verlaufend sind, einer der ersten und zweiten Funktionsabschnitte monoton steigend und der andere der ersten und zweiten Funktionsabschnitte monoton fallend ist.

2. Vorrichtung nach Anspruch 1, **dadurch gekennzeichnet, dass** der Übergang (53, 57) vom ersten Funktionsabschnitt (51, 55) zum zweiten Funktionsabschnitt (52, 56) stetig ausgebildet ist und/oder der Übergang (54, 58) vom zweiten Funktionsabschnitt (52, 56) zum ersten Funktionsabschnitt (51, 55) stetig ausgebildet ist.

3. Vorrichtung nach Anspruch 2, **dadurch gekennzeichnet, dass** der erste Funktionsabschnitt (52) und zweite Funktionsabschnitt (52) eine Sinusfunktion bilden.

4. Vorrichtung nach einem der Ansprüche 1 bis 3, **dadurch gekennzeichnet, dass** die Sensoreinheit (27) eine erste Messfläche (29A) und eine zweite Messfläche (29B) umfasst, wobei die erste Messfläche (29A) von der zweiten Messfläche (29B) verschieden ist.

5. Vorrichtung nach Anspruch 4, **dadurch gekennzeichnet, dass** die Sensoreinheit (27) ein erstes Sensorelement (33A), welches die erste Messfläche (29A) umfasst, und ein zweites Sensorelement (33B), welches die zweite Messfläche (29B) umfasst, aufweist.

**6.** Vorrichtung nach Anspruch 4, **dadurch gekennzeichnet, dass** die Sensoreinheit (27) ein Sensorelement (31) mit einem Messbereich (32) aufweist, wobei eine erste Messfläche (29A) und eine zweite Messfläche (29B) in den Messbereich (32) integriert sind.

**7.** Verfahren zum Ermitteln einer Referenzkurve (43) für die Drehlage (φ) eines Rotationsbauteils (11) mittels einer Vorrichtung (10) nach einem der Ansprüche 4 bis 6, mit den Schritten:

■ der Messstrahl (26), der auf die Außenkontur (23) der rotierenden Encoderscheibe (21) und auf die Sensoreinheit (27) gerichtet ist, wird von der ersten Messfläche (29A) als erste Messwerte (M1.i) und von der zweiten Messfläche (29B) als zweite Messwerte (M2.j) erfasst,

■ die ersten Messwerte (M1.i) und zweiten Messwerte (M2.j) werden von der Sensoreinheit (27) an die Kontrolleinheit (28) übermittelt,

■ die ersten Messwerte (M1.i) und zugehörige erste Zeitwerte (T1.i) werden von der Kontrolleinheit (28) als erste Messkurve (41) und die zweiten Messwerte (M2.j) und zugehörige zweite Zeitwerte (T2.j) als zweite Messkurve (42) dargestellt,

■ die erste Messkurve (41) und zweite Messkurve (42) werden von der Kontrolleinheit (28) relativ zueinander verschoben, bis eine Phasendifferenz von 90° zwischen einer phasenverschobenen ersten Messkurve (43) und einer phasenverschobenen zweiten Messkurve (44) vorliegt,

■ aus der phasenverschobenen ersten Messkurve (43) und phasenverschobenen zweiten Messkurve (44) werden von der Kontrolleinheit (28) für mehrere erste Zeitwerte ($T_1$) erste Funktionswerte ($R_1$) und mehrere zweite Zeitwerte ($T_2$) zweite Funktionswerte ($R_2$) bestimmt und auf die Quotienten aus den ersten und zweiten Funktionswerten ($R_1$, $R_2$) wird die Arcustangens-Funktion gemäß der Formel

$$\varphi = \tan^{-1}\left(\frac{R_1}{R_2}\right)$$

angewandt und

■ die berechneten Funktionswerte werden von der Kontrolleinheit (28) im Zeitverlauf dargestellt und als Referenzkurve (45) für die Drehlage (φ) des Rotationsbauteils (11) gespeichert.

**8.** Verfahren nach Anspruch 7, **dadurch gekennzeichnet, dass** als erste Funktionswerte ($R_1$) die ersten Messwerte (M1.i) und als zweite Funktionswerte ($R_2$) die zweiten Messwerte (M2.j) verwendet werden.

**9.** Verfahren nach Anspruch 7, **dadurch gekennzeichnet, dass** als erste Funktionswerte ($R_1$) erste Näherungswerte und als zweite Funktionswerte ($R_2$) zweite Näherungswerte verwendet werden, wobei die ersten Näherungswerte aus der phasenverschobenen ersten Messkurve (43) und die zweiten Näherungswerte aus der phasenverschobenen zweiten Messkurve (44) bestimmt werden.

12

11

15

17

16

10

21

22

14

13

18

FIG. 1A

FIG. 1B

23

22

21

24

**FIG. 2A**

25

22

18

23

21

29A  29B

26

27

**FIG. 2B**

FIG. 3A

FIG. 3B

EP 4 012 355 A1

M1.i

M2.j

41

42

Zeit t

T1.i  T2.j

**FIG. 4A**

R₁

R₂

43

44

Zeit t

**FIG. 4B**

φ

180°

-180°

45

Zeit t

**FIG. 4C**

12

**FIG. 5A**

**FIG. 5B**

**Europäisches Patentamt**
**European Patent Office**
**Office européen des brevets**

# EUROPÄISCHER RECHERCHENBERICHT

Nummer der Anmeldung

EP 20 21 3663

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 388 556 A1 (BAUMER INNOTEC AG [CH]) 23. November 2011 (2011-11-23) | 1-6 | INV. G01D5/347 |
| A | * Seite 6, Absatz 34 - Seite 9, Absatz 64; Abbildungen 1-3,7 * | 7-9 | |
| A | KR 2010 0059647 A (SAMSUNG TECHWIN CO LTD [KR]) 4. Juni 2010 (2010-06-04) * das ganze Dokument * | 1-9 | |
| A | US 2017/227383 A1 (TSENG HSIN-TE [TW]) 10. August 2017 (2017-08-10) * das ganze Dokument * | 1-9 | |

RECHERCHIERTE SACHGEBIETE (IPC)

G01D

Der vorliegende Recherchenbericht wurde für alle Patentansprüche erstellt

| Recherchenort | Abschlußdatum der Recherche | Prüfer |
|---|---|---|
| München | 20. April 2021 | Lyons, Christopher |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

    ...............................................................
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 20 21 3663

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-04-2021

| Im Recherchenbericht angeführtes Patentdokument | Datum der Veröffentlichung | Mitglied(er) der Patentfamilie | Datum der Veröffentlichung |
|---|---|---|---|
| EP 2388556 A1 | 23-11-2011 | CN 102435215 A<br>EP 2388556 A1 | 02-05-2012<br>23-11-2011 |
| KR 20100059647 A | 04-06-2010 | JP 4768799 B2<br>JP 2010127658 A<br>KR 20100059647 A | 07-09-2011<br>10-06-2010<br>04-06-2010 |
| US 2017227383 A1 | 10-08-2017 | CN 107044863 A<br>DE 102017102152 A1<br>KR 20170093757 A<br>TW 201728878 A<br>US 2017227383 A1 | 15-08-2017<br>10-08-2017<br>16-08-2017<br>16-08-2017<br>10-08-2017 |

EPO FORM P0461

Für nähere Einzelheiten zu diesem Anhang : siehe Amtsblatt des Europäischen Patentamts, Nr.12/82